# EUROPEAN PATENT APPLICATION

(11) **EP 1 480 450 A2**
(43) Date of publication of application: **24.11.2004**
(21) Application number: 04252973.5
(22) Date of filing: 20.05.2004
(51) Int. Cl.: H04N 5/222, H04N 5/268

(54) **Automated video production**

(30) Priority: 20.05.2003 GB 0311595
(71) Applicant: BRITISH BROADCASTING CORPORATION, London W1A 1AA (GB)
(72) Inventor: Thomas, Graham Alexander, East Sussex TN22 3HA (GB); Debenham, Paul Richard, Surrey CR0 4BY (GB); Dawson-Pick, David, Buckinghamshire HP16 9PL (GB); Attard, Jon, London SW1V 1RY (GB)
(74) Representative: Kazi, Ilya

(57) **Abstract**

A method for producing video coverage of an event by automatically switching between available camera views based on data gathered from the event. Cameras may be fixed or may be automated to track a selected participant, or to anticipate a desired view based on event data. Sources of data include the location of participants derived from tracking cameras and image analysis, and automatically updated scoring information in the case of sports coverage. A series of rules can be formulated for a given event state to guide and select cameras in response to each detected event state.

## Description

This invention relates generally to video production, and particularly but not exclusively to vision mixing. The present invention is particularly applicable in the field of television sports coverage.

The demand for sports coverage is high, and it is increasingly desirable to provide the viewer with a large number and wide range of televised sporting events. The increasing number of channels and introduction of interactive television has created further capacity and demand for televised sporting events. A potential drawback to covering a large number of events is that a correspondingly large number of camera operators are typically required.

The use of automated cameras in video production is already known, for example from the applicant's co-pending patent application No. GB 0305926.8 where it is proposed to provide a number of slave cameras which are automatically controlled to point and focus at a desired point, based on the parameters of a master camera, which might typically be manually operated. Such a system can provide a number of different views of a given point in space. In many sports however it is desirable to have shots of, for example, two or more players concurrently.

It is therefore an object of the present invention to provide an improved method of producing video coverage of an event from multiple camera sources.

Accordingly, in a first aspect the invention comprises a method for producing video coverage of an event comprising:
defining a plurality of event states for an event;
receiving information pertaining to event status;
determining a current event state of the event from among the plurality of predefined event states based on the received information and at least one trigger rule relating received information to an event state;
selecting a camera view from a plurality of available camera views based on the current event state determined based on said at least one trigger rule.

In this way appropriate views can automatically be selected by gathering data from the event and responding to that data according to certain rules. Event states and associated rules are determined depending on the event, and can suitably be formulated from a knowledge of the typical or a predicted sequence of actions which comprise the event.

In some embodiments, event states may comprise trigger events, for example a sudden change in a parameter that is being monitored or measured. Alternatively, or additionally, an event state may comprise an ongoing state that may be determined based on the value (for example the instantaneous value) of a monitored parameter. The event state can preferably be determined at any point in time based on measured parameters at that time.

Preferably detection of a trigger event or determination of an event state includes monitoring one or more selected participants in the event. Monitoring may be in the form of tracking the location of the participant, analysing the movements of the participant or both. This can be performed by providing one or more tracking cameras to monitor the event, and estimating the location of the selected participant by identifying that participant in the images produced by the tracking cameras. Where certain assumptions can be made, such as a person's feet remaining at ground level, or a person's head remaining a certain distance above the ground, an estimate of position can be made using only one tracking camera. More than one tracking cameras can be provided to give more accurate results. Desirably a production camera to provide video footage may also be used as a tracking camera in some applications.

In an embodiment where the location of participants is tracked, a trigger event or change in the determined event state may be defined as a participant moving to a selected location or area, or by movement in a particular direction, or even by movement at or above a particular speed.

The motions or actions of a participant can similarly be monitored by analysing camera images of the participant. Once an image of the participant has been obtained it can be analysed or compared to a reference to determine a trigger event or event state. For example, the action of a tennis player reaching up to serve may comprise a trigger event. Alternatively the bending down to the table of a snooker player may comprise a trigger event. Alternatively, these events may alter the monitored parameters to cause a change in the determined current event state, as described in more detail below.

It can be seen that in this way, certain motions and actions of participants in an event can be used to automatically select a corresponding appropriate camera view of that event, without the necessity of user intervention to determine when and which view changes should be made.

An advantageous method of identifying a selected participant in a camera image is by keying. This enables an outline of the participant to be determined. Where a participant moves against a substantially still background, difference keying may be employed. Other types of keying are equally possible, and include chroma-keying (e.g. to identify a sportsperson against a grass background) and motion detection. Examples of keying methods can be found in Applicant's co-pending Patent Application No. GB 0305294.1

It is preferable that participants of interest can be identified and selected automatically. In certain applications this may be realised by monitoring a particular area for a participant, or identifying the motion of a participant. This is possible where the participant's location may be anticipated, or where the participant is substantially isolated in view, for example in a particular service court in tennis. Motion may be used to identify a participant such as a bowler approaching the wicket in a cricket game. Alternatively participants may be identified for tracking by a user. This can be performed either directly on an image of the event, or from the point of focus of a master camera, as determined from pan, tilt and zoom information.

A further factor that may be used to determine the event state may be a history of previous event states, for example the system may be more likely to select an event state if that event state has commonly been selected for the event in the past.

Preferably the event is a sports event, and detection of a trigger event or determination of the current event state may be based on scoring information from that sports event. Scoring information may include the actual score in a sports event, and also further sports statistics, such as the identity of the server in tennis, the number of balls remaining in an over in cricket etc. More preferably the scoring information can be obtained automatically, for example from an on screen scoring system, or electronic scoreboard.

It will be appreciated that in this embodiment of the invention scoring information is used as a readily available and, in many instances automatically updated, source of information for the sports event on which a view selection can be based.

Preferably the trigger event is a change in the score of the sports event, or equally preferably a change in an event related sports statistic. These events may also be used to detect a change in the determined current event state.

Trigger events or event states may also be actively incorporated into the event, for example by positioning sensors to detect certain actions or motions. Sensors could be positioned in a linesman's flag to detect an offside in football, or in a snooker cue to determine the angle of a shot in a snooker match. A trigger event may also be sound based. Microphones could be used to detect the sound of a racquet striking a ball. In many sports events such microphones are already used and therefore this information is readily available, e.g. to detect a thin edge in a cricket match.

Preferably more than one camera is provided. A range of views can be provided by one or more cameras. It is particularly useful to be able to automatically pan and tilt a camera, especially in close up or mid shots, to follow a particular participant. In one embodiment therefore, there is further provided one or more automated cameras, the camera parameters for which are adjusted based on data gathered from the event. Preferably all of pan, tilt, zoom and focus may be adjusted automatically. In more advanced embodiments, cameras may be moved, for example driven on rails or booms, in response to data gathered from the event. It will be understood that this may provide a very wide range of available views at the expense of increased mechanical and control complexity.

In a preferred embodiment a trigger rule may comprise switching between zoom settings for a particular camera. This may suitably comprise selecting between a close up view, mid view or a wide angle view provided by a camera. A trigger rule may also comprise switching between cameras. A trigger rule may equally comprise moving or adjusting the parameters of one or more automated cameras, either between predetermined settings or according to location information gathered from the event. Trigger rules may also be a combination or sequence of rules including for example time delays. A trigger rule may be activated on detection of a particular current event state or transition between current event states.

Thus the action of selecting a camera view may comprise any of the view selection operations described above. It should be understood though, that although in many cases only one view may be selected at a time for an output signal, movement or adjustment of more than one camera may be made simultaneously, regardless of which view is being selected as an output.

In an embodiment where the location of participants are tracked, a particular camera view of that participant may track the participant's motion through the use of an automated pan and/or tilt mounting in response to location information derived for the participant, as described above. Zoom and focus controls may also be automated based on location information, or using an automatic picture framing algorithm. Thus mid shots and close ups with relatively narrow fields of view may be available for selection, provided over a period of time when a participant (e.g. a sports player) is tracked by the camera. Even when the location of a participant cannot accurately be predicted, a close up view can be provided based on the tracked location. This feature of the invention may be extended to provide virtual camera views, as described in the applicant's co-pending Application No. GB 0305926.8. In such an embodiment, real images from one or more cameras can be used, in conjunction with data about the location of a participant, to provide a virtual view along a desired view line.

Automated cameras can be driven so as to produce optimal, or at least sufficient real images to be able to create a desired virtual view, e.g. a player's line of sight or a view from the ball in a football match. Cameras can be controlled in groups from which virtual views can be derived, and can be continually updated with information concerning which real views are necessary or desirable to create a particular virtual view. When the view of a selected participant is occluded in one camera image, another camera can be automatically driven to compensate, or could even be driven pre-emptively in anticipation of a particular view being required. This would obviously be very difficult to achieve with conventional user operated cameras, and is significantly more involved that simply providing a number of slave cameras to point at the average centre of a manually operated camera.

In a variation on this embodiment, where the event is a sports event, automated cameras can be controlled based on scoring information. Scoring information and statistics will often dictate the location of payers, and by deriving a rule or set of rules based on scoring or statistics, an automated camera can be driven to provide a predetermined view. For example, after a point is decided in tennis, scoring information can be used to determine the portion of the baseline to which the server will return. In snooker, after a break has ended, a player will often return to his seat.

This feature may be provided independently, and therefore in a further aspect of the invention there is provided a method for producing video coverage of a sports event comprising automatically controlling the camera parameters of an automated camera based on scoring information for the event.

It should be appreciated that various combinations of event data can be used to drive automated cameras. A further alternative for controlling automated cameras is to use data from one or more manually controlled cameras. Although this involves at least one camera operator, automated cameras can be provided with additional data from scoring and/or participant location as described above and, where a particular desired view is already being provided by a user operated camera, provide the 'next most useful view' of the event. This method can be used to increase the number of available views with automated cameras, without introducing the possible redundancy of having two cameras providing substantially the same view.

In a more advanced embodiment of the invention, prediction algorithms can be used to determine a point of interest within the event and automatically drive a camera to provide a view of that point. This may be based on predictable patterns of events such as a ball being thrown back to the wicket keeper by a fielder, or from data derived directly from the event such as the measured trajectory of a ball.

In an application in which a fast moving event is filmed, it may be difficult to provide a desired view in a sufficiently quick response time. It may even be desired to provide a particular view retrospectively. This is particularly the case when a mid or close up shot is provided by panning and tilting a particular camera.

In a still further aspect of the invention therefore, there is provided a method of producing a moving video sequence at a desired resolution comprising providing a series of images at a first resolution higher than said desired resolution, deriving a series of image portions from said series images corresponding respectively to portions of the images at selected positions within the images, and outputting the series of image portions to create a video stream at the desired resolution.

The source series of images may advantageously be provided by a wide angle, or high resolution camera, for example an HDTV camera, preferably providing a greater number of pixels than required for the desired output. Preferably the desired resolution is suitable for a television broadcast output. This effectively provides a degree of spatial oversampling, and portions of the images obtained can be used as lower resolution sub-images to provide a video output. This method beneficially allows detail from the edges of the source images to be captured and made the centre of focus in the resulting output.

This aspect has particular benefit when the camera providing the source images is panned or tilted. In a first application, the pan or tilt speed of the camera can effectively be increased by taking a series of sub-images from a window which scans across the image space of the camera output in the direction of movement of the camera. In this way, where there is a lag in the response of the camera movement caused by mechanical and drive limitations, the speed of response of the system can be augmented, allowing fast moving objects, such as balls in sports, to be tracked more effectively. In a second application, a series of sub-images can be taken from a window which scans across the image space of the camera output in a direction opposite to the direction of pan or tilt. This can be performed to give the appearance of a still camera image at a particular location. A key advantage to this application is that the location can be away from the centre of the field of view of the first camera. In many situations this will allow a still image to be produced of a location which can be determined retrospectively, for example the point where a ball lands on a court.

This aspect extends to providing an output series of images by taking zoomed in portions of the source series of images and interpolating these smaller portions to provide an output of a required size. A number of known techniques may be used to interpolate the images.

It is desirable that the event is a live event, and that camera views are selected in real time. This is particularly beneficial in that a live broadcast can be output with automatic editing decisions.

The invention will now be described by way of example only with reference to the following drawings in which:
Figure 1 is a schematic illustration of a system according to one aspect of the present invention;
Figures 2a and 2b illustrate series of sub-images being derived from input series of images;
Figure 3 is a schematic illustration of state-space for a tennis match.

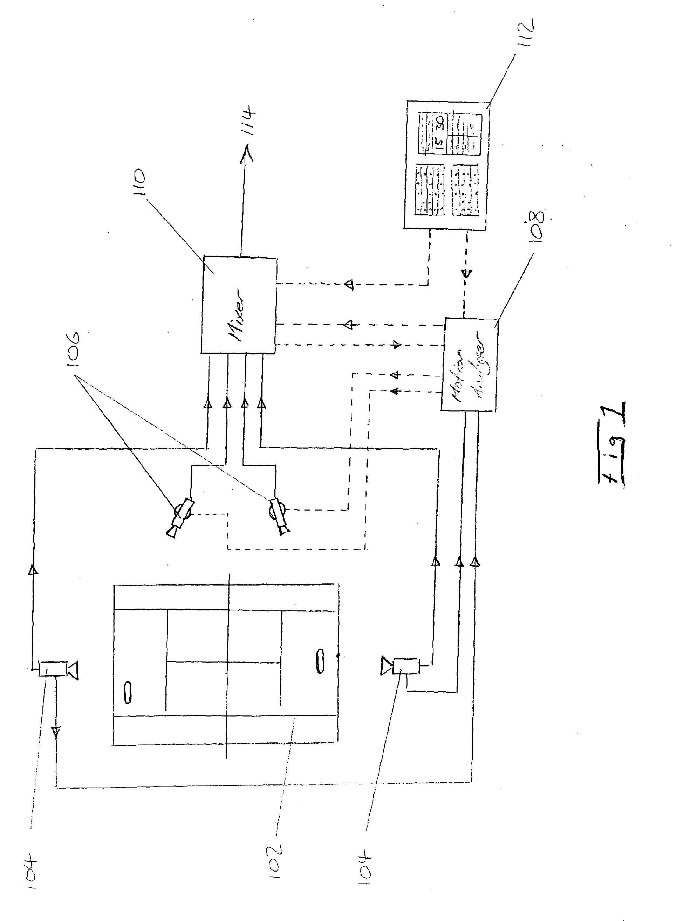

With reference to Figure 1 there is shown a tennis court 102, two fixed position wide angle cameras 104 and two automated cameras 106 which may be adjusted for pan and tilt and zoom. Images from cameras 104 are fed to a motion analyser 108, which can provide estimates of the positions of players on the court. Scoring information is also fed to the motion analyser from electronic scoreboard 112. Motion analyser 108 may also analyse the actions of the players. Location, action and scoring information are used to provide drive signals to cameras 106 to track the players, and cameras 106 can provide close up or mid shots of the players. Cameras 106 may also be able to correctly frame the players automatically. Images from all four cameras are provided to mixer unit 110. Also provided to the mixer unit is data representing the locations and actions of the players from motion analyser 108, and scoring information from scoreboard 112.

Mixer 110 uses data gathered from the court to select between camera images to produce a video output 114. The mixer detects trigger events which occur and follows a predetermined set of rules in selecting a camera view. In the current example of a tennis match, before the start of a game the mixer selects a wideshot of the court from either of cameras 104. When the players arrive on court they are detected from images from cameras 104 by difference keying and their positions are estimated and tracked, and cameras 106 are driven to follow the player on their respective side of the court to provide a constantly available midshot from the side. The scoring system provides information regarding where the first service will be made from, and when a player moves to this area the mixer receives this information, and automatically switches to the midshot of the server. As the player prepares to serve the action of extending his racquet up in the air is recognised by motion analyser 108 and triggers the mixer to switch back to a wideshot from the camera 104 at the opposite end of the court from the server. The mixer can detect from the scoring system when the point is won and who by. The mixer automatically selects a close up of the winning player for two seconds, followed by a close up of the losing player for two seconds, before returning to a wideshot of the court.

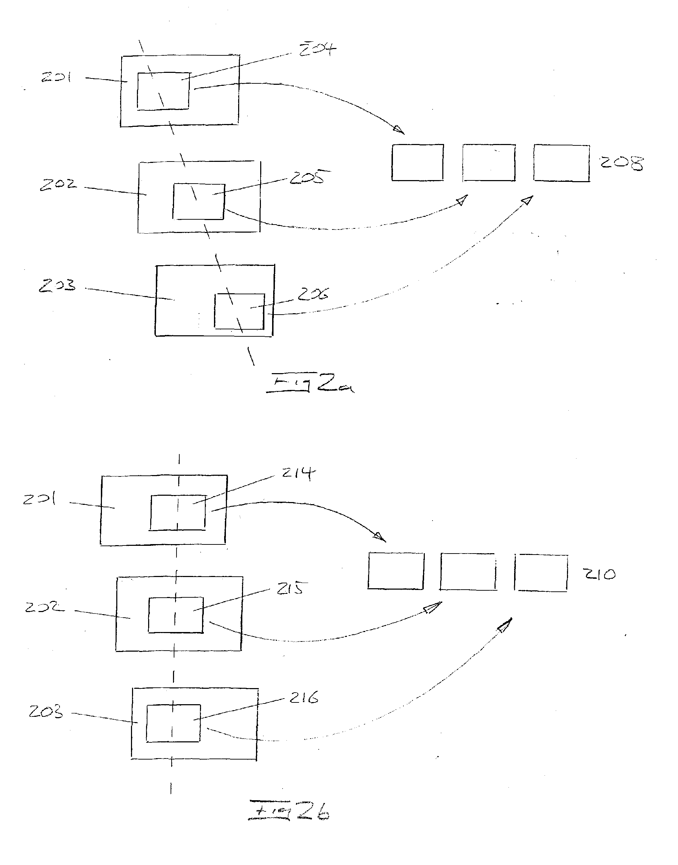

Figures 2a and 2b show two examples of providing a sequence of images corresponding to a desired view in a desired resolution from a sequence of images of a different view in a higher resolution. In Figure 2a a series of input images 201, 202, 203 are provided from a camera panning across a scene in a left-to-right direction. Sub-images 204, 205, 206 are selected from various areas of the input image and extracted to form a video output 208. In this example sub-image 204 is selected from the left of image 201, 205 from the centre of 202, and 206 from the right of 203, thus amplifying the motion of the input sequence. It can be seen that the effect of this process is to produce an output 208 with an increased pan speed from left to right.

In Figure 2b, input images 201, 202, 203 are again provided from a camera panning across a scene. This time sub-images 214, 215, 216 are selected from different areas of the input images: 214 from the right, 215 from the centre and 216 from the left, thus compensating for the motion of the input sequence. The effect this time is to produce an output 210 which is a substantially still image.

It will be appreciated from the preceding description that, in some embodiments, to control the movement of cameras and the selection of camera outputs from information gathered from the event being filmed, it may be convenient to divide the process into two distinct processes:
- analysis of live information gathered from the event in order to determine an "event state" or a "trigger event"
- selection of camera shots based on the current "event state" or the "trigger event" detected.

This division of processes may enable the rules for shot selection and framing to be separated from the process of determining what is going on in the event itself. Thus a change to the kind of data available from the event, such as the provision of an additional source of scoring information, may require only the first process to be changed. Similarly, a change to the preferred style of shot selection, or the provision of an additional camera whose output may be selected, may require only a change to the second process.

By way of further illustration of possible embodiments, some examples of possible event states are as follows:
a) For a tennis match, possible event-states might include: Player Preparing to Serve, Ball in Play, Ball Out of Play, Players Resting, Match Concluded.
b) In an awards ceremony, possible event states might include: Person Giving Speech on Podium, Person Approaching Stage from Crowd, Person Walking Across Stage.
c) For a boxing match, possible event-states might include: Competitors Approaching Ring, Match Underway, End Of Round, Competitor Knocked Down, Winner Declared.
d) For a Parliamentary Debate, possible event-states might include: Members Entering the Chamber, MP Standing at Despatch Box, Loud Heckling, Speaker Speaking.
e) For darts, possible event-states might include: Player Preparing to Throw, Dart Striking Board, Players Swapping Over.
f) For football, possible event-states might include: Players Entering Field, Kick-Off, Ball in Play, Goal, Foul, Player Sent Off.

Artificial Intelligence (Al) techniques may be used to determine the event state by analysing data from one or more sources. These sources may include, but are not limited to, object tracking data, sound recognition and a score tally. If these inputs are combined with a manually selected event-state they can be used as training data. Once the Al modules are sufficiently trained, the inputs can be used by the Al modules to calculate the current event state.

One or more Al modules may be used to determine the current event-state. The Al modules may be implemented using a variety of Al techniques, these include, but are not limited to: a State Graph, a Belief Network and a Neural Network.

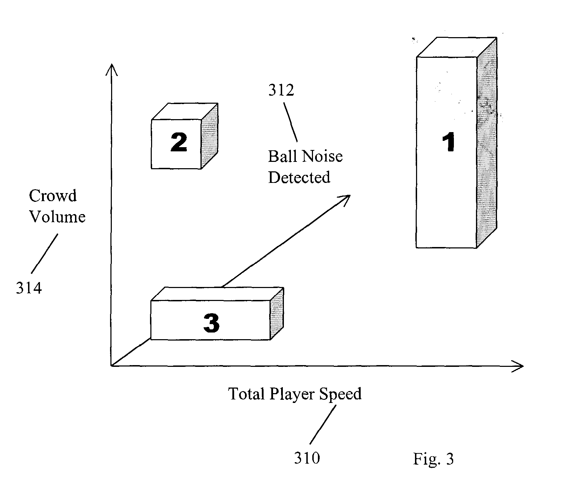

An example implementation of a State Graph is described below with reference to Figure 3.

During training, each independent input 310, 312, 314 into the State Graph is assigned an orthogonal axis in a multidimensional state-space. At a specified interval, the value of each input is recorded in the state-space, and labelled with its manually specified state. The data belonging to each state is collated into a 'state-volume' within the state-space.

During run-time, the inputs at a specific time are converted into a vector in the state-space and the software determines which state-volume is closest to the vector, thus determining, with a confidence measure, the current event-state.

Figure 3 shows a possible state-space for a tennis match. The three axes are Total Player Speed 310, Crowd Volume 314 and Ball Noise Detected 312. The three state-volumes that can be identified here are Ball In Play 1, Players Resting 2 and Player Preparing to Serve 3.

For example, in the event state Ball in Play 1, the player speed 310 is likely to be high, the ball noise detected 312 is likely to be high and the crowd volume 314 is likely to be variable. The system may therefore determine, based on measuring these parameters in a live match, that the current event state is Ball In Play 1. Similarly, when the event state is Players Resting 2, the crowd volume 314 is likely to be high and the ball noise detected 312 and total player speed 310 are likely to be low, hence a point in the match when these parameters occur may be attributed to a Players Resting 2 event state.

Further descriptions and examples of Belief Networks and Neural Networks can be found in Artificial Intelligence, A Modern Approach. Stuart Russell & Peter Norvig, Prentice Hall 1995, Pages 413-625.

Once the Al module(s) have determined, with sufficient confidence, the current event state, a state change may be undertaken. The user will pre-define the possible states and may also define permitted state transitions. For example, in the tennis match described above the user may choose not to permit a direct transition from state 2 (Players Resting) to state 1 (Ball in Play), as we would expect state 3 (Player Preparing to Serve) always to serve as an intermediate.

Once the event state has been determined, it can be used to control the shot selection. At simplest, this can be achieved using a rule-based system, for example using trigger rules. An example of a set of rules for determining camera shot selection for a tennis match is shown below:
While (game_state = player_preparing_to_serve)
Close_up(serving_player);
While (game_state = ball_in_play)
Wide_shot(whole_court);
While (game_state = ball_out_of_play)
Mid_shot(serving_player) for 5 seconds;
Mid_shot(receiving_player) for 5 seconds;
While (game_state = players_resting)
Wide_shot(whole_court) for 5 seconds;
Pan_left_to_right(crowd) for 10 seconds;
Close_up(serving_player) for 5 seconds;
Close_up(receiving_player) for 5 seconds;

An alternative to a rule-based system is to use other Al techniques, such as a neural network, to learn the shot selection by using previously-televised events for training. One approach to implementing such a system is to assign a series of weights to each game state and to other known parameters such as the current shot type in order to determine a "score" for each possible type of shot. An example of such a weight calculation is as follows:
Weight for wide_shot_of_court =
0.8 * game_state(ball-out-of-play) +
0.2 * game_state(ball_in_play) +
0.1 * number_of_seconds_since_this_shot_type_was_last_used +
-0.1 * number_of_seconds_that_this_shot_has_already_been_selected

The weight for each possible shot type may be re-evaluated every second or so, and the shot type with the highest weight may be selected. By including time-varying inputs such as
"number_of_seconds_that_this_shot_has_atready_been_selected", the system can be made to hold a shot for a certain length of time and then switch to another shot. Clearly the number of terms used to calculate the weight may be very much larger than in this example, and may include terms that are products of several inputs. The game_state values can be continuous values based on probability, rather than the "yes/no" hard-decisions that a simple rule-based system would use. The weights may be set empirically, or may be derived from training data.

It will be appreciated that although the invention has been described with respect to a number of particular examples of events, a wide range of events both sporting and non sporting may applicable for the present invention. Whereas a number of specific combinations of features have been described, these are not intended as limiting, and further different combinations of features may be employed. Features may be provided either in combination or independently as defined by the scope of the accompanying claims.

## Claims

1. A method for producing video coverage of an event comprising:
defining a plurality of event states for an event;
receiving information pertaining to event status;
determining a current event state of the event from among the plurality of predefined event states based on the received information and at least one trigger rule relating received information to an event state;
selecting a camera view from a plurality of available camera views based on the current event state determined based on said at least one trigger rule.

2. A method according to Claim 1, wherein determining the current event state includes monitoring one or more selected participants in the event.

3. A method according to Claim 2, wherein monitoring comprises monitoring the location of a participant.

4. A method according to Claim 2, wherein monitoring comprises monitoring the actions of a participant.

5. A method according to any one of Claims 2 to 4, wherein monitoring is performed by identifying the participant in an image produced by one or more tracking cameras.

6. A method according to Claim 5, wherein the participant is identified in the image by keying.

7. A method according to any preceding claim, wherein the current event state is determined based on the location of a participant.

8. A method according to any preceding claim, wherein the current event state is determined based on the speed and/or direction of motion of a participant.

9. A method according to any preceding claim, wherein the current event state is determined based on the outline form of a participant derived from an image produced by one or more tracking cameras.

10. A method according to any preceding claim, wherein an image of a participant is compared to a reference image to determine the current event state.

11. A method according to any preceding claim, wherein the event is a sports event, and detection of the current event state is based on scoring information from that sports event.

12. A method according to Claim 11, further comprising determining a change in the current event state based on a change in the score.

13. A method according to Claim 11, further comprising determining a change in the current event state based on a change in an event related sports statistic.

14. A method according to any preceding claim, wherein selecting a view according to a trigger rule comprises making a camera switch.

15. A method according to any preceding claim, wherein selecting a view according to a trigger rule comprises switching between types of shot including close-up shots, mid shots and wide shots.

16. A method according to any preceding claim, wherein a trigger rule includes a time delay.

17. A method according to any preceding claim, including controlling one or more automated cameras in response to a current event state determined.

18. A method according to Claim 17, wherein controlling comprises moving said cameras.

19. A method according to Claim 17, wherein controlling comprises controlling the pan, tilt and/or zoom of said cameras.

20. A method for producing video coverage of a sports event comprising automatically controlling the camera parameters of an automated camera based on scoring information for the event.

21. A method according to Claim 20, wherein the pan, tilt and zoom of the camera are automated.

22. A method according to claim 20 or Claim 21, wherein the camera has a plurality of preset settings, and wherein the camera automatically switches between said settings based on scoring information from the event.

23. A method of producing a moving video sequence at a desired resolution comprising providing a series of images at a first resolution higher than said desired resolution, deriving a series of image portions from said series images corresponding respectively to portions of the images at selected positions within the images, and outputting the series of image portions to create a video stream at the desired resolution.

24. A method according to Claim 23, wherein the series of images at a first resolution are provided by an HD camera.

25. A method according to Claim 23, wherein the series of images at a first resolution are provided by a wide angle camera.

26. A method according to any one of Claims 23 to 25, wherein the series of images at a first resolution are provided by a panning and/or tilting camera.

27. A method according to Claim 26, wherein series of image portions are derived from positions of the images which scan across the images substantially in the direction of pan and/or tilt.

28. A method according to Claim 26, wherein series of image portions are derived from positions of the images which scan across the images substantially in the direction opposite to the direction of pan and/or tilt.

29. A method according to any one of Claims 23 to 28, wherein the image portions are interpolated.
